# EUROPEAN PATENT SPECIFICATION

(11) **EP 0 832 798 B1**
(45) Date of publication and mention of the grant of the patent: **26.09.2001**
(21) Application number: 97306835.6
(22) Date of filing: 03.09.1997
(51) Int. Cl.: B60S 1/08

(54) **Image recognition system**
Bilderkennungssystem
Système de reconnaissance d'images

(30) Priority: 13.09.1996 JP 26538696
(43) Date of publication of application: 01.04.1998
(73) Proprietor: Mitsuba Corporation Co., Ltd., Kiryu-shi, Gunma-ken (JP)
(72) Inventor: Amagasa, Toshiyuki, Ohta-shi, Gunma-ken (JP)
(74) Representative: Johnstone, Helen Margaret

(56) References cited:
- DE-A- 19 700 665
- GB-A- 2 208 434
- PATENT ABSTRACTS OF JAPAN vol. 012, no. 251 (M-718), 15 July 1988 & JP 63 038058 A (NIPPON DENSO CO LTD), 18 February 1988
- PATENT ABSTRACTS OF JAPAN vol. 017, no. 491 (P-1607), 6 September 1993 & JP 05 126530 A (ASMO CO LTD), 21 May 1993

## Description

### TECHNICAL FIELD

The present invention relates to an image recognition system, and in particular to an image recognition system for detecting liquid drops such as rain water drops deposited on a transparent member such as a windshield.

### BACKGROUND OF THE INVENTION

Water drop sensors are conventionally known for automatically operating a windshield wiper upon detecting rain drops (water drops) deposited on the surface of a windshield of a vehicle. They include those using a base board which allows detection of water drop deposition by a change in the electric resistance of the base board, and those capturing and recognizing an image of the glass surface from inside the vehicle to detect the presence of water drops thereon.

These relying on the detection of a change in the electric resistance for detection of water drops have the disadvantage of exposing a part of an electric circuit to the exterior so that the contamination of the exposed part and the need for regular maintenance create a problem. Therefore, water drop detection systems based on image recognition have been attracting a greater attention.

However, when an attempt is made to capture the image of the surface of transparent glass, the image of the outside view is inevitably included in the surface image, and separating the water drop image from the overall image creates a problem. In order to recognize only the image of the water drops deposited on the surface of glass, it is necessary to increase the depth-of-field of the camera, but it in turn requires the distance between the camera and the glass to be reduced. However, given the angle-of-field of the camera, as the camera is brought closer to the glass, the view range of the camera progressively diminishes. This prevents a high-sensitivity and high-precision detection of water drops. Glass surface often has dust and bird droppings deposited thereon, and may have scratches thereon. The presence of these surface contaminations may also prevent accurate detection of water drops because these contaminations may be easily confused with water drops. It has therefore been desired to achieve a high-sensitivity and high-precision detection of water drops with a wide view range image recognition.

JP 63038058 that forms the closest prior art discloses an image sensor disposed on the inner surface of windshield for detecting a rain drop attached in the wiper range on the outer surface of the windshield. The sensor generates a series of images detection signals in response to the received image. Values in each series of image detection signals produced by the image sensor for every predetermined time are averaged for each series by an averaging means and set as averaged data in sequence. An output signal necessary for actuating a windslhield wiper is generated from an output signal generating means so attached raindrops are wiped by action of the windshield wiper only when the averaged data are different from each other.

JP051236530 discloses an instrument for measuring and processing spraying area of liquid. Liquid is sprayed from a washer nozzle onto a transparent inspection board, the front surface of which can be seen from the rear side. Images of the liquid on the board are taken with a CCD camera from the rear side. An image processor produces a still picture based on the picture signal of the camera.

GB 2208434A discloses a device for detecting water droplets on a vehicle window. The device comprises a light source which emits light rays towards a window and on which is fitted a diffractive optical element. The diffractive optical element conveys the light rays through the window towards a photodetector which generates a signal corresponding to the intensity of light incident on it.

DE19700665A published 24 July 1997 also discloses a device for detecting material on a windscreen. The device comprises a light source which transmits light through a transparent wall to a detector. Image processing means process the image received by the detector to determine the density of raindrops on the screen.

All of the devices disclosed by the above prior art cannot accurately extract an image of a liquid drop deposited on the surface of the transparent member from images of solid members and external objects.

### BRIEF SUMMARY OF THE INVENTION

In view of such problems of the prior art, a primary object of the present invention is to provide an image recognition system which can be used for detecting liquid drops deposited on a transparent member both accurate and sensitive manner.

A second object of the present invention is to provide an image recognition system which can accurately distinguish liquid drops deposited on a transparent member from solid depositions on the transparent member.

A third object of the present invention is to provide an image recognition system which can accurately extract an image of liquid drops deposited on a surface of a transparent member from images of external objects.

A fourth object of the present invention is to provide an image recognition system which can be used for accurately detecting rain drops on a windshield.

According to the present invention there is provided an image recognition system for detecting liquid drops deposited on a surface of a transparent member comprising:
a camera for capturing an image; and
means for determining the presence of liquid drops from the image captured by the camera,
characterised in that
the system further comprises a translucent screen placed over the transparent or a part thereof; and
the camera is for capturing an image formed on said screen from a reverse surface of said transparent member.

Owing to the use of the translucent screen, the only objects immediately near the screen such as liquid drops deposited on the transparent member are captured by the camera while the objects remote from the transparent member are disregarded. Also, solid smears deposited on the transparent member can be distinguished from liquid drops by making use of the difference in optical properties of these two different objects.

The screen may consist of a translucent sheet member placed over the inner and outer surface of the transparent member. The sheet member may also be placed between two layers of the transparent member. The translucent sheet member may consist of a frosted sheet member, a milky sheet member or a semi-transparent member as long as it allows detection of objects immediately near the screen while dispersing the light from objects remote from the transparent member. It is also possible to achieve a similar result by directly frosting a surface of the transparent member, for instance by physical or chemical means.

According to a preferred embodiment of the present invention, the transparent member consists of a windshield glass sheet separating an interior of a vehicle from outside so that rain water drops deposited on the glass sheet may be detected. The camera may be placed behind a rearview mirror, while the screen is placed on an inner surface of the windshield glass sheet opposite the camera. Alternatively, the screen may be placed on a lower edge of on an inner surface of the windshield glass sheet while the camera is mount on a part of a dashboard opposing the screen.

### BRIEF DESCRIPTION OF THE DRAWINGS

Now the present invention is described in the following with reference to the appended drawings, in which:
Figure 1 is a sectional side view of a vehicle showing the overall construction of a vehicle rain water drop detecting system based on the image recognition system of the present invention;
Figure 2 is a front view of an essential part of the vehicle of Figure 1;
Figure 3 is a flow chart for illustrating the procedure for detecting water drops;
Figure 4 is a diagram showing changes in the waveform of the signal as it goes through various processes;
Figure 5 (a) is a line data of an image captured by the CCD camera of the vehicle rain water drop detecting system according to the present invention;
Figure 5 (b) is a line data of an image captured by the CCD camera of a conventional vehicle rain water drop detecting system; and
Figure 6 is a view similar to Figure 1 showing another embodiment of the vehicle rain water drop detecting system based on the image recognition system of the present invention.

### DETAILED DESCRIPTION OF THE PREFERRED EMBODIMENTS

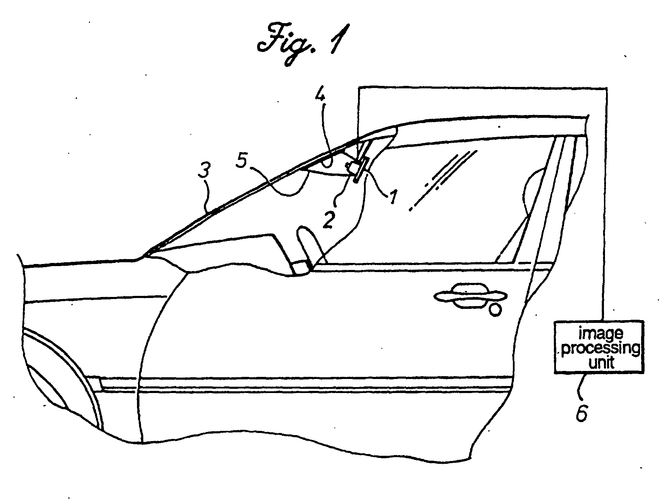

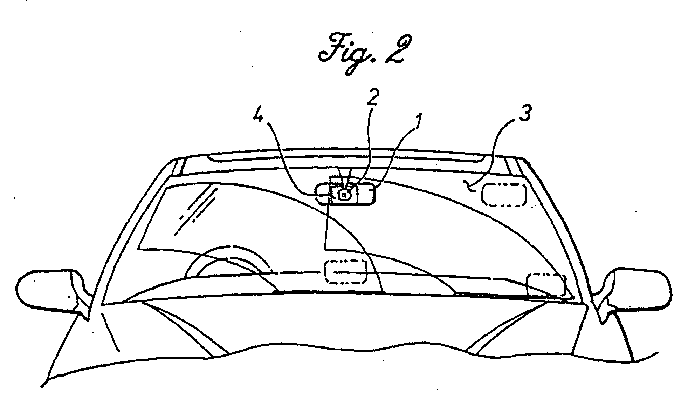

Figure 1 shows the overall construction of a water drop detecting system for a vehicle which is incorporated with an image recognition system according to the present invention. A CCD camera 2 for capturing images is provided on a reverse side of a rearview mirror 1 provided inside a cabin of a vehicle. A screen 4 is placed on an upper middle part of a windshield 3 so as to be within the area swept by a wiper blade, to oppose the CCD camera 2, and not to obstruct the view of the vehicle occupants (Figure 2). The screen 4, for instance consisting of a translucent film, such as milky film, translucent paper, frosted glass, is placed on the inner surface of the windshield 3 to disperse the light projected from some distance ahead of the screen 4, but relatively clealy shows through objects near the screen. As well known, such a translucent film clearly shows though any objects immedicately next to the film, but virtualy obstruct the view of objects remote from the film.

A hood 5 is placed over the space between the CCD camera 2 and the windshield 3 (screen 4) to shut off light from the sides, above or below, and to direct only the light from the screen 4 to the camera 2. The CCD camera 2 is connected to an image processing unit 6 which is in turn connected to a wiper drive control system which is not shown in the drawings.

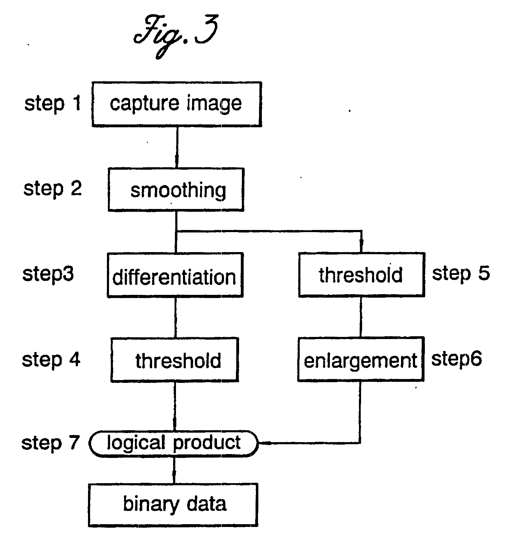

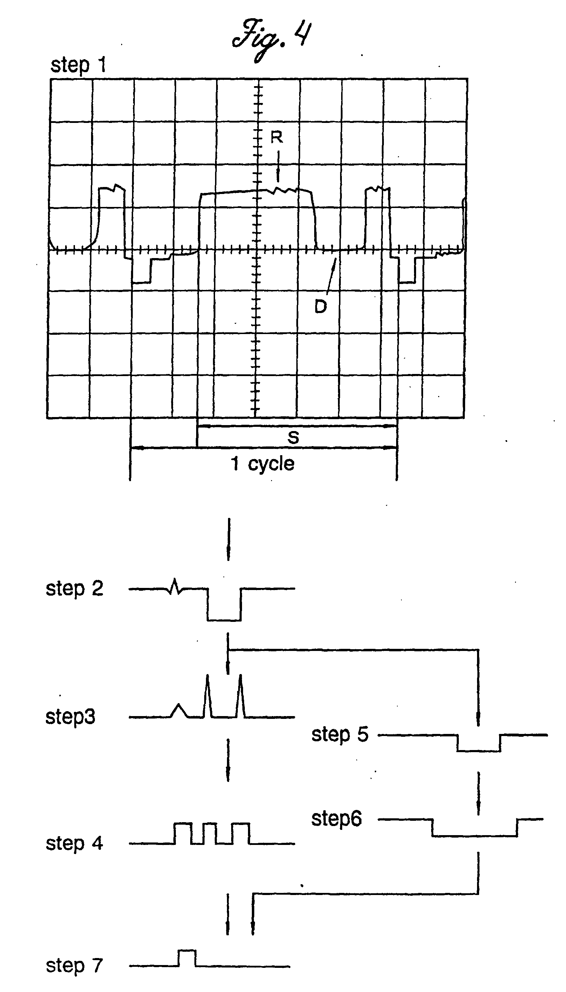

Now the operation of this embodiment is described in the following with reference to Figures 3 and 4. Figure 4 shows the waveform of an actually captured image. Normally, the CCD camera 2 sucessively captures an image at a regular interval or in synchronism with the sweeping strokes of the wiper blade (step 2). It is assumed that a water drop R and a smear D are deposited on the surface of the windshield 3, and that features corresponding to the water drop R and the smear D appear in the captured waverform. The first part of each cycle of the waveform is produced from the interal operation of the CCD camera 2, and the waveform of the actually captured signal is found in the range indicated by letter S.

The captured signal is smoothed (step 2) to remove fine noises therefrom. The signal is then differentiated (step 3) to compute the change rate components of the signal. The obtained signal is converted into binary data with a threshold process (step 4) to allow determination of the presence and the quantity of water drops and smears. The operating mode of the windshield wiper is determined according to the detected signal, and the windshield wiper is controlled accordingly. However, the detected signal contains features due to the presence of the smear D, and, therefore, cannot be directly used for correctly recognizing the water drop R. By noting the fact that the features due to solid smears D give rise to larger and sustained changes of the signal level than the features due to water drops R, the signal following the smoothing process of step 2 is subjected to a threshold process (step 5) based on a prescribed level, and then to a logical product process (step 7) with an enlarged signal (step 6) so that the features due to the smear D may be removed, and the binary data contains only the feature due to the water drop R. The enlargement process (step 6) advances the leading edge of the pulse produced by the presence of a smear and delays the trailing edge of the pulse so that the logical product process can be accuately carried out even when some time delay is produced between the two signal flow lines (the signal flow line of steps 3 and 4, and the signal flow line of steps 5 to 7).

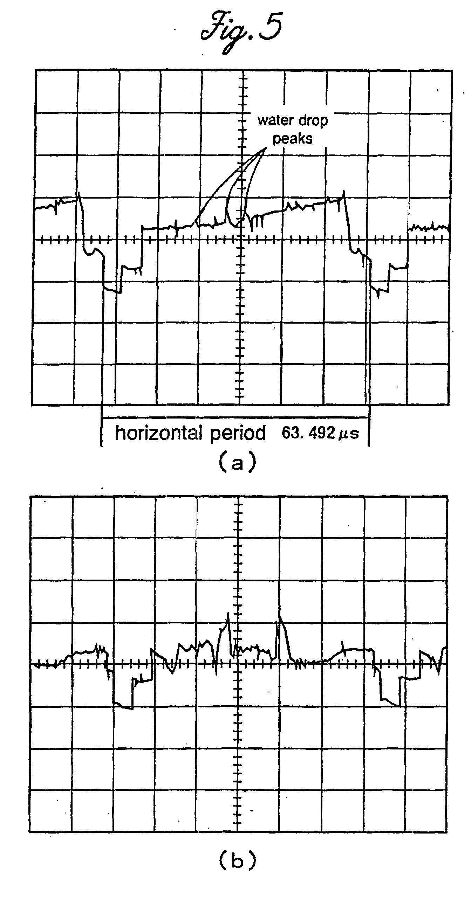

Figure 5 compares the signals obtained by the CCD camera for the case (a) where the image is captured by using the screen and the case (b) where the image is directly captured without using the screen. Figure 5(a) clearly indicates the changes in the signal due to the presence of the water drops, but Figure 5(b) includes such a large interference from the outside view that the determination of the presence of water drops is very difficult.

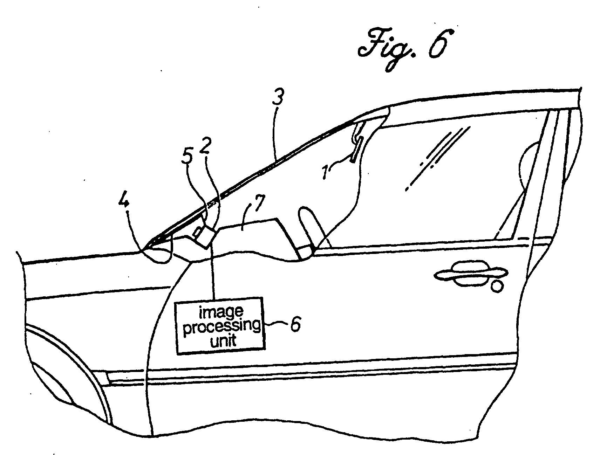

The screen made of a milky translucent film was attached to the inner surface of the upper middle part of the windshield in the above described embodiment, a similar film may be placed on the outer surface of the windshield or between a pair of glass sheets. It is also possible to frost a surface of the windshield by physical means such as fine abrasive particles, or by chemical means such as a hydrogen fluoride etchant. Larger water drops form clearer images when the screen is placed on the outer surface of the windshield, but smaller water drops form clearer images when the screen is placed on the inner surface of the windshield because the water drops perform the function of lenses. The method for forming the screen is not limited by the placing of a film, but the screen may also be formed by direct vapor deposition on the windshield surface or by application of a heat cured coating over the surface of the windshield. The position of the screen may also be freely selected as long as it would not obstruct the view of the vehicle occupants, in particular that of the vehicle operator, as indicated by the imaginary lines in Figure 2. For instance, when the screen is placed along the lower edge of the windshield, the CCD camera 2 may be embedded inside the dashboard 7 so as not to obstruct the view of the vehicle occupants as shown in Figure 6.

The image recognition system of the present invention was described as a rain drop detecting system for a vehicle such as a passenger car in the above embodiment, but the application of the present invention is not limited by the above described embodiment. The present invention can be applied to any applications where the state of liquid deposition on the surface of a transparent member is required to be determined. Depending on the application, the screeen may be placed over the entire surface of the member so that the liquid drop detection may be carried out over the entire surface of the transparent member.

Thus, according to the present invention, a translucent screen is placed over a transparent member or a part thereof, the image showing through the screen is captured by a camera from the reverse surface of the transparent member, and the presence and the quantity of the liquid drops are determined from the captured image so that the image remote from the screen such as the external view showing through the transparent member are not captured, and only the liquid drops located immediately next to the screen are extracted. Thus, the sensitivity and the precision in detecting liquid drops deposited on a member can be improved by using a simple arrangement.

Although the present invention has been described in terms of a preferred embodiment thereof, it is obvious to a person skilled in the art that various alterations and modifications are possible without departing from the scope of the present invention which is set forth in the appended claims.

## Claims

1. An image recognition system for detecting liquid drops deppsited on a surface of a transparent member (3) comprising:
a camera (2) for capturing an image; and
means (6) for determining the presence of liquid drops from the image captured by the camera,
**characterised in that**
the system further comprises a translucent screen (4) placed over the transparent (3) or a part thereof; and
the camera (2) is for capturing an image formed on said screen (4) from a reverse surface of said transparent member (3).

2. An image recognition system according to claim 1, wherein said screen (4) comprises a translucent sheet member placed over said transparent member (3).

3. An image recognition system according to claim 2, wherein said translucent sheet member comprises a frosted sheet member.

4. An image recognition system according to claim 2, wherein said translucent sheet member comprises a semi-transparent sheet member.

5. An image recognition system according to claim 2, wherein translucent sheet member comprises a milky sheet member.

6. An image recognition system according to claim 1, wherein said transparent member (3) consists of a windshield glass sheet separating an interior of a vehicle from outside so that rain water drops deposited on said glass sheet may be detected.

7. An image recognition system according to claim 6, wherein said camera (2) is placed on a reverse side of a rearview mirror (1), and said screen (4) is placed on an inner surface of said windshield glass sheet (3) opposite said camera (2).

8. An image recognition system according to claim 6, wherein said screen (4) is placed on a lower edge of on an inner surface of said windshield glass sheet (3), and said camera (2) is mounted on a part of a dashboard opposing said screen (4).

9. An image recognition system according to claim 2, wherein said translucent sheet member (4) is placed over an inner surface of said transparent member (3).

10. An image recognition system according to claim 2, wherein said translucent sheet member (4) is laminated between two layers of said transparent member (3).

11. An image recognition system according to claim 2, wherein said translucent sheet member (4) is placed over an outer surface of said transparent member (3).

12. An image recognition system according to claim 1, wherein said screen (4) is formed by frosting a surface of said transparent member (3).

## Patentansprüche

1. Bilderkennungssystem zum Erfassen von Flüssigkeitstropfen, die auf eine Oberfläche eines transparenten Elements (3) abgeschieden sind, umfassend:
eine Kamera (2) zum Aufnehmen eines Bilds; und
Mittel (6) zur Bestimmung der Anwesenheit von Flüssigkeitstropfen aus dem von der Kamera aufgenommenen Bild,
**dadurch gekennzeichnet, daß**
das System weiter einen durchscheinenden Schirm (4) umfaßt, der über dem transparenten Element (3) oder einem Teil desselben angeordnet ist; und
die Kamera (2) dem Aufnehmen eines Bilds, das auf dem Schirm (4) gebildet wird, von einer Rückseitenoberfläche des transparenten Elements dient.

2. Bilderkennungssystem nach Anspruch 1, bei dem der Schirm (4) ein durchscheinendes Folienelement umfaßt, das über dem transparenten Element (3) angeordnet ist.

3. Bilderkennungssystem nach Anspruch 2, bei dem das durchscheinende Folienelement weiter ein mattiertes Folienelement umfaßt.

4. Bilderkennungssystem nach Anspruch 2, bei dem das durchscheinende Folienelement ein halb transparentes Folienelement umfaßt.

5. Bilderkennungssystem nach Anspruch 2, bei dem das durchscheinende Folienelement ein milchig weißes Folienelement umfaßt.

6. Bilderkennungssystem nach Anspruch 1, bei dem das transparente Element (3) aus einer Windschutzscheiben-Glasscheibe besteht, welche das Innere eines Fahrzeugs von der Außenseite trennt, so daß Regenwassertropfen, die auf der Glasplatte abgeschieden sind, erfaßt werden können.

7. Bilderkennungssystem nach Anspruch 6, bei dem die Kamera (2) auf eine Rückseite eines Rückspiegels (1) angeordnet ist und der Schirm (4) auf einer Innenfläche der Windschut zscheiben-Glasscheibe (3) gegenüber der Kamera (2) angeordnet ist.

8. Bilderkennungssystem nach Anspruch 6, bei dem der Schirm (4) auf einem unteren Rand einer Innenfläche der Windschutzscheiben-Glasplatte (3) angeordnet ist und die Kamera (2) auf einem Teil eines Armaturenbretts angebracht ist, der dem Schirm (4) gegenüberliegt.

9. Bilderkennungssystem nach Anspruch 2, bei dem das durchscheinende Folienelement (4) über einer Innenfläche des transparenten Elements (3) angeordnet ist.

10. Bilderkennungssystem nach Anspruch 2, bei dem das durchscheinende Folienelement (4) zwischen zwei Schichten des transparenten Elements (3) laminiert ist

11. Bilderkennungssystem nach Anspruch 2, bei dem das durchscheinende Folienelement (4) über einer Außenoberfläche des transparenten Elements (3) angeordnet ist.

12. Bilderkennungssystem nach Anspruch 1, bei dem der Schirm (4) durch Mattieren einer Oberfläche des transparenten Elements (3) gebildet ist.

## Revendications

1. Système de reconnaissance d'image pour la détection de gouttes de liquide déposées sur la surface d'une pièce transparente (3), comprenant
- une caméra (2) pour la capture d'une image ; et
- un moyen (6) pour déterminer la présence de gouttes de liquide à partir de l'image capturée par la caméra ;
**caractérisé en ce que** :
- le système comprend, de plus, un écran translucide (4) placé sur la pièce transparente (3) ou sur une partie ; et
- la caméra (2) est prévue pour la capture d'une image formée sur l'écran (4) à partir d'une surface opposée de la pièce transparente (3).

2. Système de reconnaissance d'image selon la revendication 1, dans lequel l'écran (4) comprend une pièce en feuille translucide placée sur la pièce transparente (3).

3. Système de reconnaissance d'image selon la revendication 2, dans lequel la pièce en feuille translucide comprend une pièce en feuille dépolie.

4. Système de reconnaissance d'image selon la revendication 2, dans lequel la pièce en feuille translucide comprend une pièce en feuille semi-transparente.

5. Système de reconnaissance d'image selon la revendication 2, dans lequel la pièce en feuille translucide comprend une pièce en feuille trouble.

6. Système de reconnaissance d'image selon la revendication 1, dans lequel la pièce transparente (3) est constituée d'une feuille de verre de pare-brise séparant l'intérieur d'un véhicule de l'extérieur de façon à pouvoir détecter des gouttes de pluie déposées sur la feuille de verre.

7. Système de reconnaissance d'image selon la revendication 6, dans lequel la caméra (2) est placée sur le verso d'un miroir de rétroviseur (1), et l'écran (4) est placé sur une surface intérieure de la feuille de verre de pare-brise (3) en face de la caméra (2).

8. Système de reconnaissance d'image selon la revendication 6, dans lequel l'écran (4) est placé sur un bord inférieur d'une surface intérieure de la feuille de verre de pare-brise (3), et la caméra (2) est montée sur une partie d'un tableau de bord opposée à l'écran (4).

9. Système de reconnaissance d'image selon la revendication 2, dans lequel la pièce de feuille translucide (4) est placée sur une surface interne de la pièce transparente (3).

10. Système de reconnaissance d'image selon la revendication 2, dans lequel la pièce de feuille translucide (4) est prise en sandwich entre deux couches de la pièce transparente (3).

11. Système de reconnaissance d'image selon la revendication 2, dans lequel la pièce de feuille translucide (4) est placée sur une surface externe de la pièce transparente (3).

12. Système de reconnaissance d'image selon la revendication 1, dans lequel l'écran (4) est formé par dépolissage d'une surface de la pièce transparente (3).
